# EUROPEAN PATENT APPLICATION

(11) **EP 4 604 056 A1**
(43) Date of publication of application: **20.08.2025**
(21) Application number: 24157900.2
(22) Date of filing: 15.02.2024
(51) Int. Cl.: G06T 7/00, G06T 7/11

(54) **ANATOMY-ALIGNED IMAGE PATCHES FOR GRADING A CONDITION OF AN ANATOMICAL STRUCTURE**

(71) Applicant: Koninklijke Philips N.V., 5656 AG Eindhoven (NL)
(72) Inventor: WEESE, Rolf Jürgen, Eindhoven (NL); FLÄSCHNER, Nick, Eindhoven (NL); WENZEL, Fabian, 5656AG Eindhoven (NL); EWALD, Arne, Eindhoven (NL)
(74) Representative: Philips Intellectual Property & Standards

(57) **Abstract**

The present invention relates to a (computer-implemented) method for generating training data for training a classifier. The method comprises receiving a medical image comprising an anatomical structure of a subject, analyzing the medical image with respect to a positioning of the anatomical structure in the medical image, and determining based on a result of the analyzation at least a first region of interest of the anatomical structure and a second region of interest of the anatomical structure. The method comprises further generating at least a first image patch corresponding to the first region of interest of the anatomical structure and a second image patch corresponding to the second region of interest of the anatomical structure, and providing the first image patch and the second image patch as training data for training the classifier.

## Description

### FIELD OF THE INVENTION

The present invention relates to a method for generating training data for training a classifier, a method for training a classifier using the training data generated with the method for generating training data, and a computer-implemented method of classifying and/or grading a condition of a region of interest of an anatomical structure of a subject.

### BACKGROUND OF THE INVENTION

Findings in, for instance, magnetic resonance knee images can automatically be detected by segmenting the anatomy, defining regions-of-interest around the anatomical structure related to a finding and applying a neural-network based classifier indicating presence of a finding and its severity, thereby grading condition. For some findings like cartilage damage, a more detailed analysis of the location of the damage and its grade may be desired since otherwise some of the medical information critical for a good diagnosis might be missed.

The inventors of the present invention have thus found that it would be advantageous to have an improved method of automatically grading a condition of an anatomical structure in a medical image.

### SUMMARY OF THE INVENTION

It is an object of the present invention to provide improved methods for generating training data for training a classifier, training a classifier using the training data, and classifying and/or grading a condition of a region of interest of an anatomical structure of a subject.

The described embodiments similarly pertain to a (computer-implemented) method for generating training data for training a classifier, the method for training a classifier using the training data generated with the above method, and the computer-implemented method of classifying and/or grading a condition of a region of interest of an anatomical structure of a subject. The embodiments described further may be combined in any possible way. Synergistic effects may arise from different combinations in various ways of the embodiments described further although these combinations might not be described explicitly in detail.

Further on, it shall be noted that all embodiments of the present invention concerning a method might be carried out with the order of the steps as described, nevertheless this has not to be the only and essential order of the steps of the method. The herein presented methods can be carried out with another order of the disclosed steps without departing from the respective method, unless explicitly mentioned to the contrary hereinafter.

According to a first aspect of the invention, there is provided a (computer-implemented) method for generating training data for training a classifier. The method comprises receiving a medical image comprising an anatomical structure of a subject, analyzing the medical image with respect to a positioning of the anatomical structure in the medical image, and determining based on a result of the analysis at least a first region of interest of the anatomical structure and a second region of interest of the anatomical structure. The method comprises further generating at least a first image patch corresponding to the first region of interest of the anatomical structure and a second image patch corresponding to the second region of interest of the anatomical structure, and providing the first image patch and the second image patch as training data for training the classifier.

Thus, the basic concept of the invention may be explained using magnetic resonance knee images and cartilage damage as an example, although the method according to the invention may also be applied to medical images acquired with various imaging methods like: magnetic resonance imaging, computed tomography imaging, ultrasound imaging, pathology imaging, or X-ray imaging. Further, the method according to the invention is not restricted to classifying or grading cartilage changes, such as cartilage damage, but may also be used for classifying and/or grading of damage or other anatomical changes of the meniscus, ligaments, or any other body parts.

In order to generate anatomically aligned image patches, the medical image of a knee, for example, is analyzed, which can be done using, for instance, model-based segmentation in a magnetic resonance image of a subject. The medical image can comprise a cartilage as anatomical structure of interest. In addition or alternatively, landmarks may be determined that describe certain points of the body of the subject or of the anatomical structure that are precisely to determine, like an end point of a meniscus or cartilage, or a connecting point of a ligament to a bone, etc. These landmarks may be added to the medical image. By using these landmarks, for example, at least a first region of interest and a second region of interest of the anatomical structure is determined. Image patches are sampled that correspond to the at least first region of interest and second region of interest of the anatomical structure. Thus, a plurality of image patches are generated using in some instances a single medial image of a subject. In some other instances, there might be several medical images, or a collection (stack) of multiple medical images. Preferably, a single medical image is used, though. The plurality of images patches may have similar dimensions and may correspond to different regions of the anatomical structure. Thus, two or three different image patches may depict different portions of an anatomical structure like a cartilage or a meniscus. Analysis and image patch construction are preferably done separately. As different portions of the anatomical structure may comprise similar pathologies, the method according to the invention can be advantageously used to provide multiple image patches using a single medical image, thus providing an increased amount of training data for training an artificial intelligence-based classifier for grading and/or classifying a condition of the anatomical structure.

Thus, the method according to the invention may generate anatomy-aligned image patches for training and inference of neural-network based classifiers of findings. The image patches may not be rectangular grids but comprising of layers of pixels and/or voxels parallel to a contour or surface of the anatomical structure. Preferably, the image patches are aligned with the anatomical structure such that the image patches comprise a cross section through the region of interest of the anatomical structure, thereby providing a clear visualization of possible degradation or damage of the anatomical structure. For example, a contour or a surface may be determined in the medical image and lines parallel to the contour are generated, that may be arranged equidistantly. On each line parallel to the contour, equidistant points can be selected. After connecting the layers parallel to the surface or contour with lines perpendicular to each parallel line, a bent grid is provided. Alternatively, deformed triangles may be used instead of squares for generating the grid.

Optionally, an interface might be provided to correct information used to construct the anatomy-aligned patches. For example, the positioning of the determined landmarks in the segmented medical image (-s) can be corrected or adjusted by the use of user input received via the user interface. For the example of cartilage damage, it is proposed to encode the different regions for which cartilage damage is usually expected or reported together with sampling information in the model used for a model-based segmentation. Model-based segmentation works by constructing a generic model of the anatomy, for instance the knee. For segmentation, this model is deformed in a way that it matches the structures in the medical image and is adapted to the image. The encoding can also be done in a way that image information from different regions can be used to train classifiers indicating presence and a grade of damage of the anatomical structure like cartilage. In turn, the same classifiers can be used to detect cartilage defects in different regions of a body or an anatomical structure. This approach allows to better exploit training data and increase performance, such as but not limited to, accuracy of neural-network based classifiers for the detection of findings.

Thus, the collection of a huge number of images with ground truth about a finding, e.g. cartilage damage, grading, region, for training of a neural network is improved and a smaller amount of images with ground truth is needed for training. The method according to the invention allows constructing robust and accurate classifiers that indicate the presence of a specific finding in an image region. The information can be used to automatically generate information for reporting. In addition, an interface might be provided to correct information used to construct the anatomy-aligned patches.

In case that the imaging, such as magnetic resonance imaging, examination comprises multiple scans, model-based segmentation and image patch construction might be done independently in each scan. Other embodiments may include performing the segmentation and image patch construction concurrently, in-parallel to each other, alternatively, or in any other possible way suitable. For example, when image patches are constructed from a single scan of a set of scans, the patches can be transferred to other scans of the set using geometric information about image and scanner coordinate systems or geometric information obtained by image registration. Alternatively, image patches might be constructed based on the model-based segmentation result for a single scan. The grey-value information of the different patches might be concatenated into a single patch, for instance, with a vector of grey-values for each pixel or voxel.

Thus, the problem of insufficient determination of findings in medical images is solved by a system and method that may encode information about location and image sampling into the model used for model-based segmentation and use this information after model adaptation to generate anatomy-aligned image patches for training and inference of neural-network based classifiers.

In an embodiment of the invention, the classifier is a neural network trained or to be trained for classifying and/or grading a condition of the anatomical structure comprised in the medical image. The neural network can be, for example, ResNet, or any other artificial intelligence suitable for that purpose. In addition or alternatively, traditional classifiers like random forests can be used. The article of Yao, X., Wang, X., Wang, SH. et al. A comprehensive survey on convolutional neural network in medical image analysis. Multimed Tools Appl 81, 41361-41405 (2022), discloses various solutions for analysis medical images using artificial intelligence, the disclosure of this document is incorporated herein by reference in its entirety.

In an embodiment of the invention, the anatomical structure is a cartilage, a meniscus, or a ligament. The anatomical structure can also be a joint of the subject comprising cartilage, or other similar anatomical structures. The joint can be, for example, knee, hip, or shoulder, or any other joint of the body. Further, the anatomical structure could be or comprise AHA segments of the left ventricular myocardium and/or intervertebral discs of the spine.

In an embodiment of the invention, the medical image is a magnetic resonance image, a computed tomography image, ultrasound, pathology or an X-ray image, although other medical imaging modalities are not excluded.

In a non-limiting exemplary embodiment of the invention, the segmentation performed is of a model-based segmentation type. The model-based segmentation provides a favorable solution for segmenting medical images, as the three-dimensional model can be easily adapted to the relevant anatomical structures.

In an embodiment of the invention, analyzing the medical image comprises determining a plurality of landmarks in the medical image, the plurality of landmarks corresponding to or defining at least the first region of interest and the second region of interest.

The landmarks may describe certain well-defined points of the body of the subject or of the anatomical structure that are precisely to determine. For example, characteristic points of the body or the anatomical structure comprised in the image can be used to determine a landmark. These characteristic points can be an edge or an outermost point of a cartilage or a bone, or a connection of a ligament to a bone, for example. The landmarks may serve as checkpoints for a defined positioning and orientation of the image patches. Landmarks are generally defined as points of interest in the image, such as important points reflecting coordinates positions. The landmarks may serve as checkpoints for a defined positioning and orientation of the image patches. The image patches may be defined as a grid with some degrees of freedom, like, e.g. position, orientation, (anisotropic) scaling, or deformation, etc. The landmarks may be used to determine parameters corresponding to these degrees of freedom like the center of the image patch or orientation. The landmarks may be added to the segmented image. By using the landmarks, for example, at least a first region of interest and a second region of interest of the anatomical structure is determined.

In an embodiment of the invention, analyzing the medical image comprises performing a model-based segmentation of at least the anatomical structure of the subject in the medical image, and a plurality of landmarks are comprised in a 3D-model of the model-based segmentation and are assigned to the medical image during the model-based segmentation, and/or the plurality of landmarks are determined in the medical image using a neural network. Thus, it is proposed to encode information about location and image sampling into a model used for model-based segmentation and to use this information after model adaptation to generate anatomy-aligned image patches for training and inference of neural-network based classifiers of findings. Therefore, landmarks may be, for instance, encoded in the three-dimensional model of the model-based segmentation. As a model-based segmentation approximately maps anatomical locations on the model to corresponding locations in the image, the landmarks can be used to generate anatomy-aligned image patches. The model-based segmentation allows to encode landmarks into the generic model that is adapted to the image for segmentation. After adaptation, the position of the triangles with the desired encoding can be used to determine the landmarks. Model-based segmentation may be regarded as an elegant and accurate approach of determining landmarks in the image.

In an embodiment of the invention, the plurality of landmarks are determined in the medical image after performing the segmentation. Thus, the medical image can be first segmented, and the landmarks are determined in the segmented medical image. As an alternative implementation, the landmarks might be detected directly using neural network based approaches. Thus, landmarks can also directly be detected with neural networks. In addition or alternatively, segmentation can also be done using U-nets and landmarks can be derived by further analyzing such segmentation results.

In an embodiment of the invention, the method comprises further providing a user interface and indicating a positioning of the plurality of landmarks in the medical image at the user interface, and receiving a user input via the user interface comprising a correction of the positioning of the plurality of landmarks in the medical image. Thus, optionally, an interface might be provided to correct information used to construct the anatomy-aligned patches. For example, a positioning of the determined landmarks in the segmented medical image can be corrected or adjusted by the use of user input received via the user interface. The user interface for refining landmarks may lead to updated classification results, wherein the user refines the e.g. positions of the landmarks, and based on these, the position of the patches is re-calculated. Classification results should show decreased sensitivity with respect to slight image rotations compared to the case that no anatomy-aligned sampling is used.

In an embodiment of the invention, the first region of interest and the second region of interest comprise anatomical structures that can have similar pathologies. For instance, all regions with cartilage can have cartilage damage, i.e., they can have similar pathologies. The actual type of damage or its grading can be different for different regions, but the same classifier can be used to classify the type of damage or its grading. In general, the pathology of different regions is expected to be different. However, subdividing an extended anatomical region in different subsections may result in a plurality of image patches comprising an anatomical structure with a similar pathology. As, for example, AHA segments and cartilage regions have different pathologies, it may not be suitable to train a classifier using both of these regions. Preferably, different AHA segments are used in training for detecting myocardial diseases and different regions with cartilage are used for training for detecting cartilage defects.

In an embodiment of the invention, the first image patch and the second image patch have substantially the same number of pixels, and/or the first image patch and the second image patch comprise a defined orientation and geometry with respect to the anatomical structure. The orientation and geometry is preferably defined by the respective anatomy. For instance, preferably in each image patch a bone is, e.g., at the lower side of the patch and the cartilage above the bone, such that the image patches are not just randomly oriented with respect to the anatomical structures or the body.

Preferably, the image patches comprise the same number of pixels or voxels, and/or are sampled in a corresponding geometry, as neural networks usually expect pre-defined grids of pixels or voxels as input. In addition or alternatively, the actual geometry of the image patches can be adapted to the anatomy at hand, e.g., may be smaller for a smaller knee and larger for a larger knee. A non-rectangular or bent grid of the image patch may be provided to match the surface of the anatomical structure like the cartilage surface, etc. Bended may be understood such that a surface of the image path corresponds to a surface of a bone or anatomical structure of interest, for example.

Thus, in more refined versions of the method according to the invention, the image patches may not be rectangular grids, but may consist of layers of pixels in 2D or voxels in 3D, that are arranged or stacked parallel or orthogonal to a contour or surface of the anatomical structure. Standard interpolation and re-sampling methods may be used to generate the grey-values of the image patches.

According to another aspect of the invention, there is provided a method for training a classifier using the training data generated with the method according to any one of the preceding embodiments, wherein the generated first image patch and second image patch of the training data are annotated with a ground truth comprising a classification and/or grading of a condition of the corresponding region of interest of the anatomical structure.

Preferably, training of the classifier is performed similar as for any multi-class classification network for an image. The multiple classes can address the different gradings of the anatomical structure. For example, the network to be trained is applied to the training images, i.e. the generated image patches, and the training objective, e.g. cross entropy, is computed in dependence of the provided ground truth, thereby modifying training parameters in order to optimize the training objective. A particular advantage of the invention is that the image patches have been generated from different anatomically well-defined image regions.

Basis for training can be, for example, a set of knee images acquired with magnetic resonance imaging together with gradings of the cartilage damage in the desired regions for the desired bones in the images. In a first step, model-based segmentation can be carried out and the image patches are constructed as described with respect to the first aspect of the invention as described above. The resulting image patches can be used together with the grading information to train for each region or for a plurality of regions a classifier for classifying the image patch according to a given grading scheme. The image patches may additionally be rotated, scaled, altered or deformed with respect to each other, in order to increase the amount of training data and too improve the training of the classifier. The classifier may be a multi-class classifier, a set of independent classifiers indicating presence of a distinct grade, or a hierarchical combination of classifiers.

The sampling of the image patches, e.g. a same number of voxels in x, y and z direction of the patch, for the different regions may be advantageously defined in a way that the same neural network can be applied to image patches for different regions of the anatomical structure in the medical image. This allows to train a single classifier for the grading of the different regions and to better exploit the available training data. In addition, the task of classifying the grading for different regions is simplified by the anatomy-aligned sampling, i.e. one axis of the image patch may point from the outside towards the inside of the bone, and another axis may be tangential to a part of the bone surface. The definition of the regions may also be extended beyond a single bone and include the femoral and the tibial cartilage, for example.

Thus, the method according to the invention allows to construct robust and accurate classifiers that indicate the presence of a specific finding in an image region. The information can be used to automatically generate information for AI-based reporting, i.e., pre-population of a radiology report with information generated by neural-network based classifiers, for example.

According to another aspect of the invention, there is provided a (computer-implemented) method of classifying and/or grading a condition of a region of interest of an anatomical structure of a subject. The method comprises receiving a medical image comprising the anatomical structure of the subject, analyzing the medical image with respect to a positioning of the anatomical structure in the medical image, and determining based on a result of the analysis at least one region of interest of the anatomical structure. The method comprises further generating at least one image patch corresponding to the at least one region of interest of the anatomical structure, and classifying and/or grading a condition of the at least one region of interest of the anatomical structure of the subject using the at least one generated image patch of the at least one region of interest and a classifier trained with the method according to any one of the preceding embodiments.

Therefore, given a newly acquired medical image, the image is analyzed, and image patches are constructed as indicated above. Preferably, information encoded in a model for a model-based segmentation is applied to the image patches, as a model-based segmentation is performed on the medical image. A classifier trained as described above is applied to the sampled image patches. The classification networks may be applicable to an image patch and might also be inferred from information encoded in the knee model. The landmarks or other information related to the construction of the image patches may be displayed on a screen as user interface and a user is provided with tools to correct this information. As a result of the correction, image patches are re-generated and updated classification results can be provided.

In addition, landmarks might be randomly, or according to a pre-defined scheme, disturbed, i.e., randomly modified, resulting in multiple classification results. This information can be used to assess stability or certainty of the classification results. In addition, a final classification result might be inferred by majority voting, thereby providing the classification result that has occurred in the majority of the multiple classifications.

In an embodiment of the invention, the step of determining at least one region of interest comprises determining a plurality of landmarks in the medical image, the plurality of landmarks defining the at least one region of interest.

In an embodiment of the invention, the method comprises further providing a user interface and indicating a positioning of the plurality of landmarks in the segmented medical image at the user interface, and receiving a user input via the user interface comprising a correction of the positioning of the plurality of landmarks in the segmented medical image.
According to another aspect of the invention, there is provided a classifier trained with the method according to any of the preceding embodiments.

According to another aspect of the invention, there is provided a data processing apparatus for carrying out the steps of the method according to any one of the preceding embodiments.

According to another aspect of the invention, there is provided a computer program comprising instructions which, when the program is executed by a computer, cause the computer to carry out the steps of the method according to any one of the preceding embodiments.

According to another aspect of the invention, there is provided a computer-readable storage medium comprising instructions which, when executed by a computer, cause the computer to carry out the steps of the method according to any one of the preceding embodiments.

Thus, the benefits provided by any of the above aspects equally apply to all of the other aspects and vice versa.

In summary, the invention relates to a (computer-implemented) method for generating training data for training a classifier. The method comprises receiving a medical image comprising an anatomical structure of a subject, analyzing the medical image with respect to a positioning of the anatomical structure in the medical image, and determining based on a result of the analysis at least a first region of interest of the anatomical structure and a second region of interest of the anatomical structure. The method comprises further generating at least a first image patch corresponding to the first region of interest of the anatomical structure and a second image patch corresponding to the second region of interest of the anatomical structure, and providing the first image patch and the second image patch as training data for training the classifier.

One of the advantages of embodiments of the present invention is that a condition of an anatomical structure in a medical image can be advantageously automatically graded by a trained classifier. The encoding can also be done in a way that image information from different regions can be used to train classifiers indicating presence and a grade of damage of the anatomical structure like cartilage. In turn, the same classifiers can be used to detect cartilage defects in different regions of a body or an anatomical structure. This approach allows to better exploit training data and increases performance like accuracy, etc., of neural-network based classifiers for the detection of findings. Thus, the invention allows reducing the number of images for constructing robust and accurate classifiers that indicate the presence of a specific finding in an image region. The invention allows constructing robust and accurate classifiers that indicate the presence of a specific finding in an image region. The information can be used to automatically generate information for reporting. In addition, an interface might be provided to correct information used to construct the anatomy-aligned patches.

The problem is solved by a method and a system that may encode information about location and image sampling into a model used for model-based segmentation and use this information after model adaptation to generate anatomy-aligned image patches for training and inference of neural-network based classifiers.

These advantages are non-limiting and other advantages may be envisioned within the context of the present application.

The above aspects and embodiments will become apparent from and be elucidated with reference to the exemplary embodiments described hereinafter. Exemplary embodiments of the invention will be described in the following with reference to the following drawings:

### BRIEF DESCRIPTION OF THE DRAWINGS

Fig. 1 shows a block diagram of a computer-implemented method for generating training data for training a classifier according to an embodiment of the invention.
Fig. 2 shows a block diagram of a computer-implemented method of classifying and/or grading a condition of a region of interest of an anatomical structure of a subject according to an embodiment of the invention.
Fig. 3A shows a 3D-model of a knee comprising bones, cartilage and ligaments for model-based segmentation.
Fig. 3B shows a magnetic resonance medical image of a knee comprising cartilage as anatomical structure and landmarks added to the medical image.
Fig. 3C shows different image patches of the regions of interest that are determined based on the landmarks.
Fig. 3D shows a bent image patch of the region of interest that is aligned with respect to the anatomical structure.
Fig. 4 shows a distal femur comprising cartilage with indicated cartilage damage in different regions of interest.
Fig. 5 shows a schematic block diagram of a method for generating training data for training a classifier according to an embodiment of the invention.
Fig. 6 shows a schematic block diagram of a method of classifying and/or grading a condition of a region of interest of an anatomical structure of a subject according to an embodiment of the invention.

### DETAILED DESCRIPTION OF EMBODIMENTS

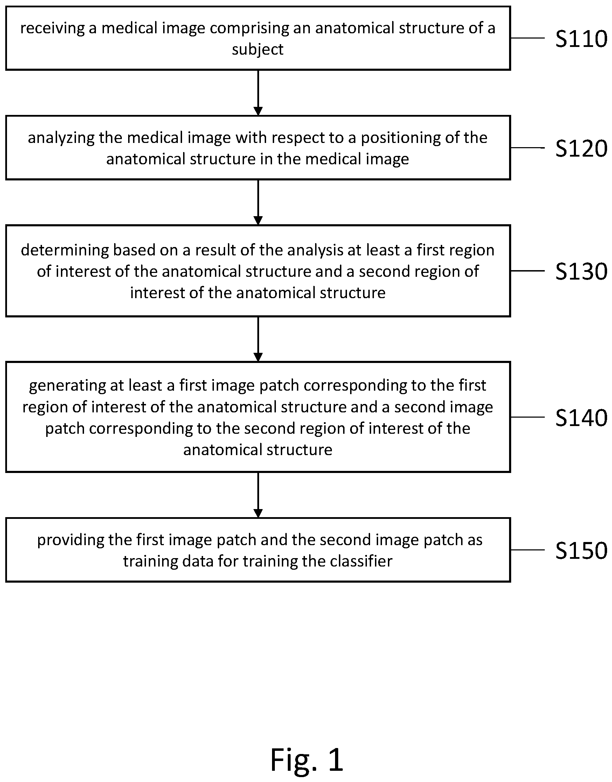

Fig. 1 shows a block diagram of a computer-implemented method for generating training data 150 for training a classifier 140 according to an embodiment of the invention. The method comprises the step S110 of receiving a medical image 110 comprising an anatomical structure 120 of a subject, the step S 120 of analyzing the medical image 110 with respect to a positioning of the anatomical structure 120 in the medical image 110, and the step S130 of determining based on a result of the analyzation at least a first region of interest 121 of the anatomical structure 120 and a second region of interest 122 of the anatomical structure (120). The method comprises further the step S140 of sampling at least a first image patch 131 corresponding to the first region of interest 121 of the anatomical structure 120 and a second image patch 132 corresponding to the second region of interest 122 of the anatomical structure 120 and the step S150 of providing the first image patch 131 and the second image patch 132 as training data 150 for training the classifier 140.

In order to generate anatomically aligned image patches, the medical image of a knee, for example, is segmented using, for instance, model-based segmentation in a magnetic resonance image of a subject. The medical image 110 can comprise a cartilage as anatomical structure 120 of interest. In addition or as an alternative, landmarks 160 may be determined that describe certain points of the body of the subject or of the anatomical structure that are precisely to determine, like an end point of a meniscus or cartilage, or a connecting point of a ligament to a bone, etc. These landmarks may be added to the image. By using the landmarks, for example, at least a first region of interest and a second region of interest of the anatomical structure is determined. Image patches are sampled that correspond to the at least first region of interest 121 and second region of interest 122 of the anatomical structure 120. Thus, a plurality of image patches 130 are generated using a single medial image 110 of a subject. The plurality of images patches may have similar dimensions and may correspond to different regions of the anatomical structure 120. Thus, two or three different image patches may depict different portions of an anatomical structure 120 like a cartilage or a meniscus. As different portions of the anatomical structure may comprise similar pathologies, the method according to the invention can be advantageously used to provide multiple image patches 130 using a single medical image, thus providing an increased amount of training data 150 for training an artificial intelligence-based classifier 140 for grading and/or classifying a condition of the anatomical structure 120. Optionally, the method can comprise further the steps of providing a user interface and indicating a positioning of the plurality of landmarks 160 in the segmented medical image 140 at the user interface, and receiving a user input via the user interface comprising a correction of the positioning of the plurality of landmarks 160 in the segmented medical image 110.

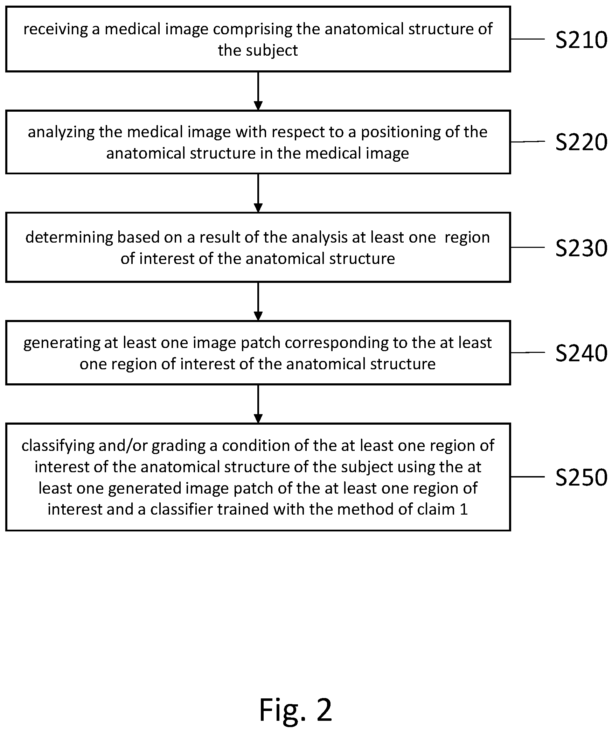

Fig. 2 shows a block diagram of a computer-implemented method of classifying and/or grading a condition of a region of interest of an anatomical structure 120 of a subject according to an embodiment of the invention. The method comprises the step S210 of receiving a medical image 110 comprising the anatomical structure 120 of the subject, the step S220 of analyzing the medical image 110 with respect to a positioning of the anatomical structure 120 in the medical image 110, and the step S230 of determining based on a result of the analyzation at least one region of interest of the anatomical structure 120. The method comprises further the step S240 of sampling at least one image patch 130 corresponding to the at least one region of interest of the anatomical structure 120, and the step S250 of classifying and/or grading a condition of the at least one region of interest of the anatomical structure 120 of the subject using the at least one sampled image patch 130 of the at least one region of interest and a classifier 140 trained with the method according to the method of training the classifier.

Therefore, given a newly acquired medical image 120, a model-based segmentation can be performed on the medical image 110, and image patches 130 are constructed as indicated above. Preferably, information encoded in the 3D-model 170 for a model-based segmentation is applied to the image patches. A classifier 140 trained as described above is applied to the sampled image patches. The classification networks may be applicable to an image patch 130 and might also be inferred from information encoded in the knee model. The landmarks 160 or other information related to the construction of the image patches may be displayed on a screen as user interface and a user is provided with tools to correct this information. As a result of the correction, image patches are re-generated and updated classification results can be provided. Optionally, the positioning of the landmarks can be corrected via input received via a user interface.

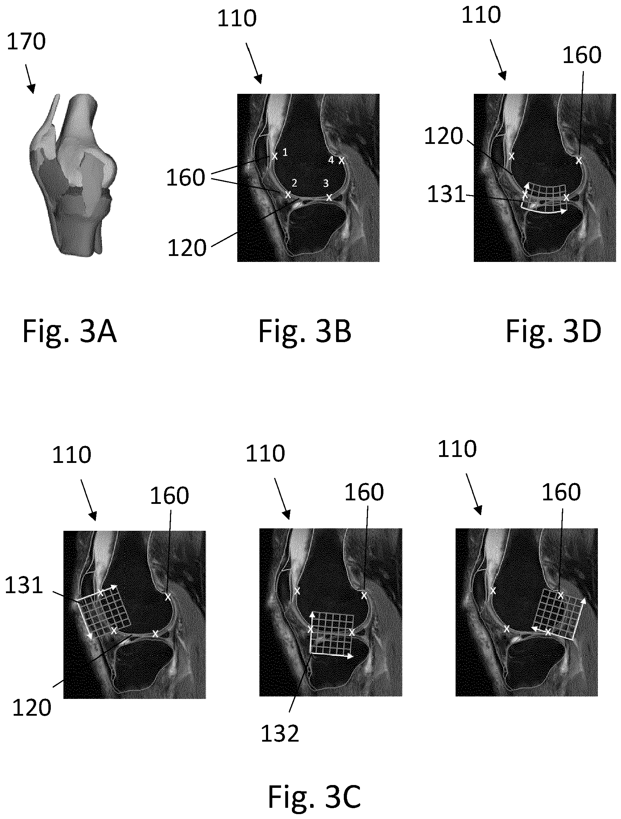

Fig. 3A shows a 3D-model 170 of a knee comprising bones, cartilage and ligaments for model-based segmentation. The 3D-model 170 can comprise a plurality of landmarks 160 that are assigned to the medical image 110 during the step of performing the segmentation based on the 3D-model.

Fig. 3B shows a magnetic resonance medical image 110 of a knee comprising cartilage as an anatomical structure 120 and landmarks 160 added to the medical image 110. The determination of at least a first region of interest 121 and a second region of interest 122 of the anatomical structure 120 can comprise the determination of a plurality of landmarks 160 in the medical image 110. The landmarks 160 can be included in the 3D-model 170 and adapted to the medical image during model-based segmentation, or can be determined after segmentation in the segmented medical image 110. A user interface can be provided and a positioning of the plurality of landmarks 160 in the segmented medical image 110 can be indicated on the user interface. An input received via the user interface comprising a correction of the positioning of the plurality of landmarks 160 in the segmented medical image 110 can be received and used for updating the positioning of the landmarks in the medical image 110. Thus, also updated image patches can be provided.

Fig. 3C shows different image patches 131,132 of the regions of interest of the anatomical structure 120 that are determined based on the landmarks 160 in the medical image 110. The figures show the landmarks 160 in the medical image 110 as white crosses, and the image patches 131, 132 generated of the respective regions of interest of the anatomical structure 120 on the basis of the landmarks 160. The image patches 131, 132 are indicated as grey grids. Preferably, the first image patch 131 and the second image patch 132 comprise a defined orientation and geometry with respect to the anatomical structure 120. One axis of the image patches in Fig. 3C points, for instance, from the outside towards the inside of the bone, and another axis is tangential to a part of the bone surface. The first region of interest 121 and the second region of interest 122 preferably comprise anatomical structures 120 that have similar pathologies. Preferably, the first image patch 131 and the second image patch 132, as well as any further image patch, have substantially similar, e.g., the same, number of pixels.

Fig. 3D shows a bent image patch 131 of the region of interest that is aligned with respect to the anatomical structure 120 and comprises a defined orientation and geometry with respect to the anatomical structure 120. In this exemplary embodiment, a curvature of the image patch 131 is adapted to a curvature of a surface of a bone or a cartilage, for example, in the medical image 110. Thus, landmarks 160 are used to define edges of the image patch 131, and the shape of the image patch 131 is chosen such that the cartilage is aligned along a longitudinal axis of and centered with respect to the image patch. In this example, a contour or a surface may be determined in the medical image and lines parallel to the contour are generated, that may be arranged equidistantly. On each line parallel to the contour, equidistant points can be selected. After connecting the layers parallel to the surface or contour with lines perpendicular to each parallel line, a bent grid is provided.

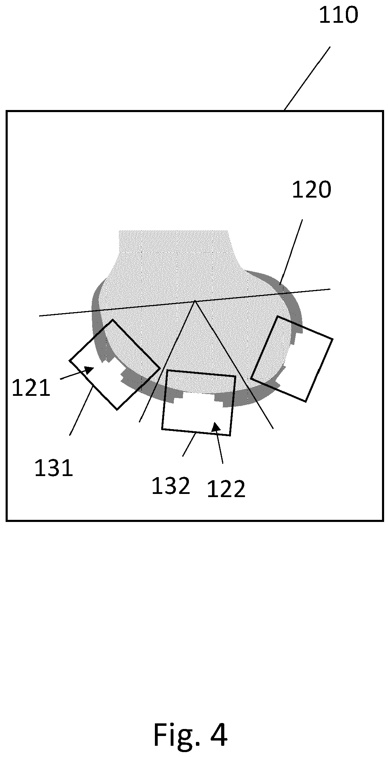

Fig. 4 shows a medical image 110 of a distal femur comprising cartilage as anatomical structure 120 with indicated cartilage damage in different regions of interest 121, 122. Image patches 131, 132 are determined comprising the first region of interest 121 and the second region of interest 122, respectively. Each of the image patches 131, 132, and every further image patch comprises the same number of pixels and a defined orientation and geometry with respect to a surface of the bone of the distal femur.

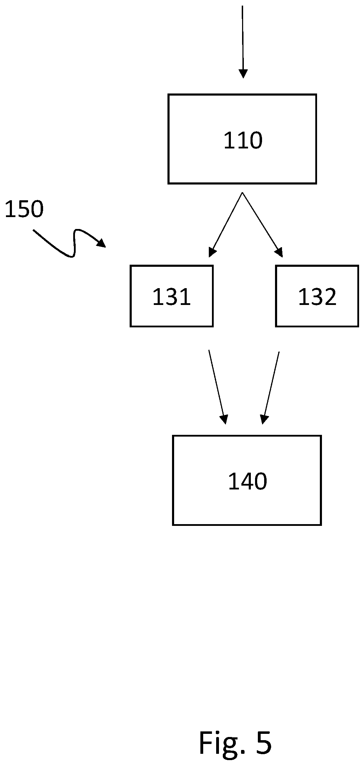

Fig. 5 shows a schematic block diagram of a method for generating training data 150 for training a classifier 140 according to an embodiment of the invention. A classifier 140 is trained using as training data 150 i.e., image patches 131, 132 generated from the medical image 110 with the method according to the invention. The sampled first image patch 131 and second image patch 132 of the training data 150 are annotated with a ground truth comprising a classification and/or grading of a condition of the corresponding region of interest of the anatomical structure 120. The classifier 140 can be a neural network trained or to be trained for classifying and/or grading a condition of the anatomical structure 120 comprised in the medical image 110. Therefore, training may be performed as for any multi-class classification network for an image, where multi-class addresses the different gradings. Thus, the network is preferably applied to the training image patches, and the training objective, e.g. cross entropy, is computed in dependence of the ground truth and network parameters are modified in order to optimize the training objective.

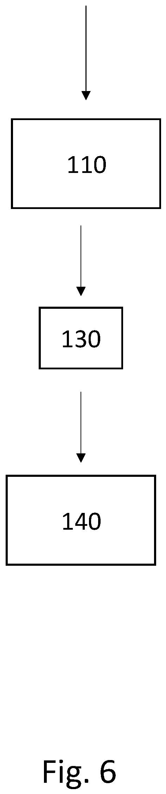

Fig. 6 shows a schematic block diagram of a method of classifying and/or grading a condition of a region of interest of an anatomical structure 120 of a subject according to an embodiment of the invention. A medical image 110 is received and an image patch 130 comprising a region of interest of an anatomical structure 120 is determined according to the method of the invention. The image patch 130 is provided to a trained classifier 140 in order to classify and/or grade a condition of the region of interest of the anatomical structure 120 of a subject.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. The mere fact that certain measures are re-cited in mutually different dependent claims does not indicate that a combination of these measures cannot be used to advantage. Any reference signs in the claims should not be construed as limiting the scope.

It is to be understood that any of the previous steps described in relation to embodiments and/or training steps described above can be performed by a specific-purpose computer system or general-purpose computer system, or a computer-readable medium, or data carrier system configured to carry out any of the steps described previously. The computer system can include a set of software instructions that can be executed to cause the computer system to perform any of the methods or computer-based functions disclosed herein. The computer system may operate as a standalone device or may be connected, for example using a network, to other computer systems or peripheral devices. In embodiments, a computer system performs logical processing based on digital signals received via an analogue-to-digital converter.

Some portions of the description are presented in terms of symbolic representations of operations on non-transient signals stored within a computer memory. These descriptions and representations are used by those skilled in the data processing arts to convey the substance of their work most effectively to others skilled in the art. Such operations typically require physical manipulations of physical quantities. Usually, though not necessarily, these quantities take the form of electrical, magnetic, or optical signals capable of being stored, transferred, combined, compared, and otherwise manipulated. It is convenient at times, principally for reasons of common usage, to refer to these signals as bits, values, elements, symbols, characters, terms, numbers, or the like. Furthermore, it is also convenient at times to refer to certain arrangements of steps requiring physical manipulation of physical quantities as modules or code devices, without loss of generality.

However, all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage devices. Portions of the present disclosure include processes and instructions that may be embodied in software, firmware, or hardware, and when embodied in software, may be downloaded to reside on and be operated from different platforms used by a variety of operating systems.

In a networked deployment, the computer system operates in the capacity of a server, or as a client user computer in a server-client user network environment, or as a peer computer system in a peer-to-peer or distributed network environment. The computer system can also be implemented as or incorporated into various devices, such as a server or another type of computer such as a workstation that includes a controller, a stationary computer, a mobile computer, a personal computer (PC), a laptop computer, a tablet computer, or any other machine capable of executing a set of software instructions sequentially or non-sequentially that specify actions to be taken by that machine. The computer system can be incorporated as an integrated system part of a larger system that includes additional devices. In an embodiment, the computer system can be implemented using electronic devices that provide voice, video, or data communication possibilities. Further, while the computer system is illustrated in the singular, the term "system" shall also be taken to include any collection of systems or sub-systems that individually or jointly execute a set or multiple sets, of software instructions to perform one or more computer functions.

The computer system may also include a processor. The processor executes instructions to implement some, or all aspects of methods and processes described herein. The processor is tangible and non-transitory. As used herein, the term "non-transitory" is to be interpreted not as an eternal characteristic of a state, but as a characteristic of a state that will last for a period. The term "non-transitory" specifically disavows fleeting characteristics such as characteristics of a carrier wave or signal or other forms that exist only transitorily in any place at any time. The processor is an article of manufacture and/or a machine component. The processor is configured to execute software instructions to perform functions as described in the various embodiments herein. The processor may be a general-purpose processor or may be part of an application specific integrated circuit (ASIC). The processor may also be a microprocessor, a microcomputer, a processor chip, a controller, a microcontroller, a digital signal processor (DSP), a state machine, or a programmable logic device, a logical circuit, including a programmable gate array (PGA), such as a field programmable gate array (FPGA), or another type of circuit that includes discrete gate and/or transistor logic. The processor may be a central processing unit (CPU), a graphics processing unit (GPU), or both. Additionally, any processor described herein may include multiple processors, parallel processors, or both. Multiple processors may be included in, or coupled to, a single device or multiple devices. The processor can include one or more internal levels of cache, and a bus controller or bus interface unit to direct interaction with a bus. The term "processor" as used herein encompasses an electronic component able to execute a program or machine executable instruction. References to a computing device comprising "a processor" should be interpreted to include more than one processor or processing core, as in a multi-core processor. A processor may also refer to a collection of processors within a single computer system or distributed among multiple computer systems. The term computing device should also be interpreted to include a collection, or network, of computing devices each including a processor or processors. Programs have software instructions performed by one or multiple processors that may be within the same computing device or which may be distributed across multiple computing devices. Further, the software instructions, when executed by the processor, perform one or more steps of the methods and processes as described herein.

The computer system further includes a main memory and a static memory, where memories in the computer system communicate with each other and the processor via a bus. Either or both main memory and the static memory may be considered representative examples of the memory of the controller, and store instructions used to implement some, or all aspects of methods and processes described herein. Memories described herein are tangible storage mediums for storing data and executable software instructions and are non-transitory during the time software instructions are stored therein. The main memory and the static memory are articles of manufacture and/or machine components. The main memory and the static memory are computer-readable mediums from which data and executable software instructions can be read by a computer (or e.g., the processor). Each of the main memory and the static memory may be implemented as one or more of random access memory (RAM), read only memory (ROM), flash memory, electrically programmable read only memory (EPROM), electrically erasable programmable read-only memory (EEPROM), registers, a hard disk, a removable disk, tape, compact disk read only memory (CD-ROM (Compact Disk - Read Only Memory)), digital versatile disk (DVD), floppy disk, Blu-ray disk, or any other form of storage medium known in the art. The memories may be volatile or non-volatile, secure and/or encrypted, unsecure and/or unencrypted.

"Memory" is an example of a computer-readable storage medium. Computer memory is any memory which is directly accessible to a processor. Examples of computer memory include RAM memory, registers, and register files. References to "computer memory" or "memory" should be interpreted as possibly being multiple memories. The memory may for instance be multiple memories within the same computer system. The memory may also be multiple memories distributed amongst multiple computer systems or computing devices. The memory may store various software applications including computer executable instructions, that when run on the processor, implement the methods and systems set out herein. Other forms of memory, such as a storage device and a mass storage device, may also be included and accessible by the processor (or processors) via the bus. The storage device and mass storage device can each contain any or all of the methods and systems discussed herein.

The computer system can further include a communications interface by way of which the computer system can connect to networks and receive data useful in executing the methods and system set out herein as well as transmitting information to other devices. The computer system further includes a video display unit as an output device by which information can be output, such as a liquid crystal display (LCD), an organic light emitting diode (OLED), a flat panel display, a solid-state display, or a cathode ray tube (CRT), for example. Additionally, the computer system includes an input device, such as a keyboard/virtual keyboard or touch-sensitive input screen or speech input with speech recognition, and a cursor control device, such as a mouse or touch-sensitive input screen or pad. The computer system also optionally includes a disk drive unit, a signal generation device, such as a speaker or remote control, and/or a network interface device.

The processes and displays presented herein are not inherently related to any particular computer or other apparatus. Various general-purpose systems may also be used with programs in accordance with the teachings herein, or it may prove convenient to construct more specialized apparatus to perform one or more method steps. The structure for a variety of these systems is discussed in the description below. In addition, any programming language that is sufficient for achieving the techniques and implementations of the present disclosure may be used. In addition, the language used in the specification has been principally selected for readability and instructional purposes and may not have been selected to delineate or circumscribe the disclosed subject matter. Accordingly, the present disclosure is intended to be illustrative, and not limiting, of the scope of the concepts discussed herein.

In accordance with various embodiments of the present disclosure, the methods described herein may be implemented using a hardware computer system that executes software programs. Further, in an exemplary, non-limited embodiment, implementations can include distributed processing, component/object distributed processing, and parallel processing. Virtual computer system processing may implement one or more of the methods or functionalities as described herein, and a processor described herein may be used to support a virtual processing environment.

The illustrations of the embodiments described herein are intended to provide a general understanding of the structure of the various embodiments. The illustrations are not intended to fully describe all the elements and features of the disclosure described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

Although specific embodiments have been illustrated and described herein, it should be appreciated that any subsequent arrangement designed to achieve the same or similar purpose may be substituted for the specific embodiments shown. This disclosure is intended to cover all subsequent adaptations or variations of various embodiments. Combinations of the above embodiments, and other embodiments not specifically described herein, will be apparent to those of skill in the art.

The preceding description of the disclosed embodiments is provided to enable any person skilled in the art to practice the concepts described in the present disclosure. As such, the above disclosed subject matter is to be considered illustrative, and not restrictive, and the appended claims are intended to cover all such modifications, enhancements, and other embodiments which fall within the scope of the present disclosure. Thus, to the maximum extent allowed by law, the scope of the present disclosure is to be determined by the broadest permissible interpretation of the following claims and their equivalents and shall not be restricted or limited by the foregoing detailed description.

### LIST OF REFERENCE SIGNS:

- 110: medical image
- 120: anatomical structure
- 121: first region of interest
- 122: second region of interest
- 130: image patch
- 131: first image patch
- 132: second image patch
- 140: classifier
- 150: training data
- 160: landmark
- 170: 3D-model

## Claims

1. A method for generating training data (150) for training a classifier (140), the method comprising:
receiving (S110) a medical image (110) comprising an anatomical structure (120) of a subject;
analyzing (S120) the medical image (110) with respect to a positioning of the anatomical structure (120) in the medical image (110);
determining (S130) based on a result of the analysis at least: a first region of interest (121) of the anatomical structure (120) and a second region of interest (122) of the anatomical structure (120);
generating (S140) at least a first image patch (131) corresponding to the first region of interest (121) of the anatomical structure (120) and a second image patch (132) corresponding to the second region of interest (122) of the anatomical structure (120); and
providing (S150) the first image patch (131) and the second image patch (132) as training data (150) for training the classifier (140).

2. The method according to claim 1, wherein the classifier (140) is a neural network trained or to be trained for classifying and/or grading a condition of the anatomical structure (120) comprised in the medical image (110).

3. The method according to any one of the preceding claims, wherein the anatomical structure (120) is a cartilage, a meniscus, or a ligament.

4. The method according to any one of the preceding claims, wherein analyzing the medical image (110) comprises determining a plurality of landmarks (160) in the medical image (110), the plurality of landmarks (160) corresponding to at least the first region of interest (121) and the second region of interest (122).

5. The method according to claim 4,
wherein analyzing the medical image (110) comprises performing a model-based segmentation of at least the anatomical structure (120) of the subject in the medical image (110), and wherein a plurality of landmarks (160) are comprised in a 3D-model (170) of the model-based segmentation and are assigned to the medical image (110) during the model-based segmentation; and/or
wherein the plurality of landmarks (160) are determined in the medical image (110) using a neural network.

6. The method according to any one of claims 4 to 5, further comprising:
providing a user interface and indicating a positioning of the plurality of landmarks (160) in the medical image (110) at the user interface, and
receiving a user input via the user interface comprising a correction of the positioning of the plurality of landmarks (160) in the medical image (110).

7. The method according to any one of the preceding claims, wherein the first region of interest (121) and the second region of interest (122) comprise anatomical structures (120) that can have similar pathologies.

8. The method according to any one of the preceding claims, wherein the first image patch (131) and the second image patch (132) have substantially the same number of pixels, and/or wherein the first image patch (131) and the second image patch (132) comprise a defined orientation and geometry with respect to the anatomical structure (120).

9. A method for training a classifier (140) using the training data (150) generated with the method according to any one of claims 1 to 8,
wherein the generated (S140) first image patch (131) and second image patch (132) of the training data (150) are annotated with a ground truth comprising a classification and/or grading of a condition of the corresponding region of interest of the anatomical structure (120).

10. A method of classifying and/or grading a condition of a region of interest of an anatomical structure (120) of a subject, the method comprising:
receiving (S210) a medical image (110) comprising the anatomical structure (120) of the subject;
analyzing (S220) the medical image (110) with respect to a positioning of the anatomical structure (120) in the medical image (110);
determining (S230) based on a result of the analysis at least one region of interest of the anatomical structure (120);
generating (S240) at least one image patch (130) corresponding to the at least one region of interest of the anatomical structure (120); and
classifying (250) and/or grading a condition of the at least one region of interest of the anatomical structure (120) of the subject using the at least one generated image patch (130) of the at least one region of interest and a classifier (140) trained with the method according to claim 9.

11. The method according to claim 10, wherein the determining at least one region of interest comprises determining a plurality of landmarks (160) in the medical image (110), the plurality of landmarks (160) defining the at least one region of interest.

12. The method according to claim 11, further comprising the steps of
providing a user interface and indicating a positioning of the plurality of landmarks (160) in the medical image (110) at the user interface, and
receiving a user input via the user interface comprising a correction of the positioning of the plurality of landmarks (160) in the medical image (110).

13. A data processing apparatus for carrying out the steps of the method according to any one of claims 1 to 12.

14. A computer program comprising instructions which, when the program is executed by a computer, cause the computer to carry out the steps of the method according to any one of claims 1 to 12.

15. A computer-readable storage medium comprising instructions which, when executed by a computer, cause the computer to carry out the steps of the method according to any of claims 1 to 12.
